# EUROPEAN PATENT APPLICATION

(11) **EP 3 467 017 A1**
(43) Date of publication of application: **10.04.2019**
(21) Application number: 17806813.6
(22) Date of filing: 01.06.2017
(51) Int. Cl.: C08L 7/00, B60C 1/00

(54) **RUBBER COMPOSITION AND TIRE**

(30) Priority: 01.06.2016 JP 2016110515
(71) Applicant: Bridgestone Corporation, Chuo-Ku Tokyo 104-8340 (JP)
(72) Inventor: TAKANO Kosuke, Tokyo 104-8340 (JP)
(74) Representative: Lang, Johannes
(86) International application number: PCT/JP2017/020519
(87) International publication number: WO 2017/209263

(57) **Abstract**

Provided is a rubber composition capable of improving fuel efficiency and wet performance of a tire, the rubber composition comprising: a rubber component (A) containing 50 mass% or more of natural rubber; a compatible resin (B); and an incompatible resin (C), the compatible resin (B) being different in SP value from the rubber component (A) by 1.5 (cal/cm³)^{1/2} or less, the incompatible resin (C) being different in SP value from the rubber component (A) by more than 1.5 (cal/cm³)^{1/2}, in which the total compounding amount of the compatible resin (B) and the incompatible resin (C) is 10 parts by mass or more with respect to 100 parts by mass of the rubber component (A).

## Description

### TECHNICAL FIELD

The present disclosure relates to a rubber composition and a tire.

### BACKGROUND

In relation to global carbon dioxide emission regulation, which is reflecting growing concern about environmental issues in recent years, there is an increasing demand for higher fuel efficiency in vehicles. In order to meet such demand, lower rolling resistance is required for tire performance. Here, in developing a tire tread rubber composition that contributes to tire rolling resistance, the loss tangent (tanδ) at around 60°C may generally be used effectively as an index, in consideration of the tire temperature which increases to around 60°C during normal driving; specifically, a rubber composition with low tanδ at around 60°C may be used as a tread rubber, to thereby suppress tire heat generation so as to reduce rolling resistance, which leads to improved tire fuel efficiency (PTL 1).

Further, in view of promoting vehicle driving safety, importance is placed on ensuring grip performance on a wet road surface (hereinafter, simply referred as "wet performance"), which requires not only to improve tire fuel efficiency but also to improve wet performance. In this regard, PTL 2 discloses a rubber composition for a tread of a tire, in which tanδ at 0°C is set to 0.95 or higher, so as to improve wet performance.

### CITATION LIST

### Patent Literature

PTL 1: JP 2012-92179 A
PTL 2: JP 2014-9324 A

### SUMMARY

### (Technical Problem)

However, when a rubber composition that is high in tanδ at 0°C is simply used in a tread rubber in order to improve tire wet performance, tanδ at 60°C, which relates to tire fuel efficiency, also becomes higher, which thus leads to a problem of deterioration in tire fuel efficiency.

It could therefore be helpful to provide a rubber composition capable of solving the aforementioned conventional problems in the art, to thereby improve tire fuel efficiency and wet performance.

It could also be helpful to provide a tire excellent in fuel efficiency and wet performance.

### (Solution to Problem)

Thus, configurations disclosed herein are as follows:
The disclosed rubber composition includes: a rubber component (A) containing 50 mass% or more of natural rubber; a compatible resin (B); and an incompatible resin (C), the compatible resin (B) being different in SP value from the rubber component (A) by 1.5 (cal/cm³)^{1/2} or less, the incompatible resin (C) being different in SP value from the rubber component (A) by more than 1.5 (cal/cm³)^{1/2},
in which the total compounding amount of the compatible resin (B) and the incompatible resin (C) is 10 parts by mass or more with respect to 100 parts by mass of the rubber component (A).

The disclosed rubber composition may be applied to a tire tread rubber, to thereby improve tire fuel efficiency and wet performance.

Here in this disclosure, the SP values (solubility parameter) of the rubber component (A), the compatible resin (B), and the incompatible resin (C) are calculated according to Fedors method, where the compatible resin (B) is different in SP value from the rubber component (A) by 1.5 (cal/cm³)^{1/2} or less and the incompatible resin (C) is different in SP value from the rubber component (A) by more than 1.5 (cal/cm³)^{1/2}.

Further, the SP value of the rubber component (A) is the SP value of a principal component, i.e., a rubber component with the highest content. When a plurality of components are contained at the highest content, the average value thereof is taken as the SP value of the rubber component (A). Here, the average value is the sum of the compounding ratio of each component × the SP value.

In a preferred example of the disclosed rubber component, the mass compounding ratio (B/C) between the compatible resin (B) and the incompatible resin (C) is 1/4 to 4/1. In this case, the rubber composition may be applied to a tire tread rubber, to thereby further improve tire wet performance.

In another preferred example of the disclosed rubber component, the compatible resin (B) has a softening point of 110°C or less. In this case, the disclosed rubber composition may be applied to a tread rubber of a tire, to thereby further improve the wet performance of the tire.

Here, in the disclosed rubber composition, the softening point is a value measured in accordance with a softening point testing method [6.4 Softening Point Test Method (Ring and Ball Method)] described in JIS K 2207.

In another preferred example of the disclosed rubber composition, the rubber component (A) further contains a modified polymer. In this case, the rubber composition may be applied to a tire tread rubber, to thereby further improve tire fuel efficiency and wet performance.

Further, the disclosed tire is characterized in that the aforementioned rubber composition is used as a tread rubber. The disclosed tire uses the aforementioned rubber composition in a tread rubber and thus is excellent in fuel efficiency and wet performance.

### (Advantageous Effect)

The rubber composition disclosed herein is capable of improving tire fuel efficiency and wet performance. Further, the tire disclosed herein is excellent in fuel efficiency and wet performance.

### DETAILED DESCRIPTION

The disclosed rubber composition and tire are illustrated in detail by way of example, based on an embodiment thereof.

### <Rubber Composition>

The disclosed rubber composition includes: a rubber component (A) containing 50 mass% or more of natural rubber; a compatible resin (B); and an incompatible resin (C), the compatible resin (B) being different in SP value from the rubber component (A) by 1.5 (cal/cm³)^{1/2} or less, the incompatible resin (C) being different in SP value from the rubber component (A) by more than 1.5 (cal/cm³)^{1/2}, and is characterized in that the total compounding amount of the compatible resin (B) and the incompatible resin (C) is 10 parts by mass or more with respect to 100 parts by mass of the rubber component (A).

The incompatible resin (C) raises the elastic modulus in a low distortion region while reduces the elastic modulus in a high distortion region. The compatible resin (B) reduces the elastic modulus both in a low distortion region and a high distortion region. In the disclosed rubber composition, the compatible resin (B) and the incompatible resin (C) are both compounded, so as to be capable of suppressing fluctuations in the elastic modulus in a low distortion region while significantly reducing the elastic modulus in a high distortion region. Thus, the disclosed rubber composition may be applied to a tire tread rubber, so as to ensure rigidity of the tread rubber in a portion that suffers minor distortion during running as being distant from the contact patch with a road surface, while increasing the deformed volume of the tread rubber that suffers significant distortion during running as being in the vicinity of the contact patch with a road surface.

Here, an increased elastic modulus in a low distortion region of a rubber composition deteriorates fuel efficiency of a tire applied with the rubber composition. However, in the disclosed rubber composition, the compatible resin (B) and the incompatible resin (C) are both compounded, to thereby suppress fluctuations of the elastic modulus in the low distortion region resulting from a resin compounded therein, to thereby suppress any influence to the tire fuel efficiency due the resin.

Meanwhile, in the disclosed rubber composition, the rubber component (A) contains 50 mass% or more of natural rubber, which reduces tanδ (loss tangent) and improves fuel efficiency in a tire to which the disclosed rubber composition is applied.

Then, the friction coefficient (µ) on a wet road surface is proportional to the product of the rigidity of the tread rubber as a whole, the deformation volume of the tread rubber, and tanδ (loss tangent); thus, a tire having the disclosed rubber composition applied to the tread rubber thereof is capable of increasing the deformation volume of the tread rubber while ensuring the rigidity of the tread rubber as a whole even if tanδ is reduced due to the application of the rubber component (A) containing 50 mass% or more of natural rubber. Accordingly, the tire is capable of sufficiently increasing the friction coefficient (µ) on a wet road surface, and such large friction coefficient (µ) on a wet road surface can improve wet performance. Therefore, the tire having the disclosed rubber composition applied to the tread rubber thereof is improved in fuel efficiency due to tanδ being low, and is also improved in wet performance due to the friction coefficient (µ) being high on a wet road surface.

Further, a rubber composition compounded with the compatible resin (B) is low in elastic modulus from a low distortion region to a high distortion region, and thus, is likely to deteriorate tire cornering performance when applied to a tire tread rubber. However, when the compatible resin (B) and the incompatible resin (C) are both compounded to a rubber composition, the fluctuation of the elastic modulus can be suppressed in the low distortion region, which can suppress deterioration in tire cornering performance.

Further, a rubber composition compounded with the compatible resin (B) is high in adhesion, and excessively adheres to an apparatus such as a kneader or an extruder used in a manufacturing process of rubber products. However, when the compatible resin (B) and the incompatible resin (C) are both compounded to a rubber composition, the rubber composition is not excessively high in adhesion, and would not excessively adhere to an apparatus used in a manufacturing process of rubber products, which can thus suppress deterioration in workability in shaping various rubber products.

Further, a rubber composition compounded with the aforementioned compatible resin (B) is less resistant to ozone. However, when the compatible resin (B) and the incompatible resin (C) are both compounded to a rubber composition, the rubber composition is capable of suppressing deterioration in resistance to ozone, which can suppress deterioration in weather resistance of a rubber product to which the rubber composition is applied.

In the disclosed rubber composition, the rubber component (A) contains 50 mass% or more of natural rubber, preferably 60 mass% or more, and more preferably 70 mass% or more. Here, the upper limit of the content of natural rubber content is not specifically limited, and the entire content of the rubber component (A) may be natural rubber. The rubber component (A) containing 50 mass% or more of natural rubber is capable of reducing tanδ of the rubber composition, which can improve tire fuel efficiency when the rubber composition is applied to a tread rubber of a tire.

The rubber component (A) may include, in addition to natural rubber (NR), synthetic diene-based rubbers such as synthetic isoprene rubber (IR); polybutadiene rubber (BR); styrene-butadiene copolymer rubber (SBR); and styrene-isoprene copolymer rubber (SIR), and may also include other synthetic rubbers. These rubber components (A) may each be used alone or as a compound of two or more.

The rubber component (A) may preferably further include a modified polymer. The content of the modified polymer in the rubber component (A) is 50 mass% or less, preferably 10 to 45 mass%, and more preferably 20 to 40 mass%. The modified polymer thus contained in the rubber component (A) improves dispersiveness of various compounding agents in the rubber composition, and the rubber composition may be applied to a tire tread rubber so as to further improve tire fuel efficiency and wet performance.

Modified functional groups in the modified polymer may include, for example, nitrogen-containing functional groups, silicon-containing functional groups, and oxygen-containing functional groups.

Polymers to be used as the modified polymer may include: a polymer obtained by using, as a monomer, a conjugated diene compound or a conjugated diene compound and an aromatic vinyl compound, and by modifying, by a modifier, a molecular terminal and/or a main chain of a polymer or a copolymer of the conjugated diene compound or of a copolymer of the conjugated diene compound and the aromatic vinyl compound; or, alternatively, a polymer obtained by using, as a monomer, a conjugated diene compound or a conjugated diene compound and an aromatic vinyl compound, and by polymerizing or copolymerizing these monomers, using a polymerization initiator having a modified functional group.

As to the monomers to be used for the synthesis of the modified polymer, examples of the conjugated diene compound may include: 1,3-butadiene; isoprene; 1,3-pentadiene; 2,3-dimethylbutadiene; 2-phenyl-1,3-butadiene; and 1,3-hexadiene, and examples of the aromatic vinyl compound may include: styrene; α-methylstyrene; 1-vinylnaphthalene; 3-vinyltoluene; ethylvinylbenzene; divinylbenzene; 4-cyclohexylstyrene; and 2,4,6-trimethylstyrene.

A preferred example of the modifier is a hydrocarbyloxy silane compound.

Preferred as the hydrocarbyloxy silane compound is a compound represented by the following general formula (I):

R¹ₐ-Si-(OR²)₄₋ₐ ··· (I).

In the general formula (I), R¹ and R² each independently represent a monovalent aliphatic hydrocarbon group with 1 to 20 carbon atoms and a monovalent aromatic hydrocarbon group with 6 to 18 carbon atoms, where "a" is an integer of 0 to 2, OR² may be the same or different from each other when than one OR² are included. Further, no active proton is included within the molecule.

Also preferred as the hydrocarbyloxy silane compound may be a compound represented by the following general formula (II):

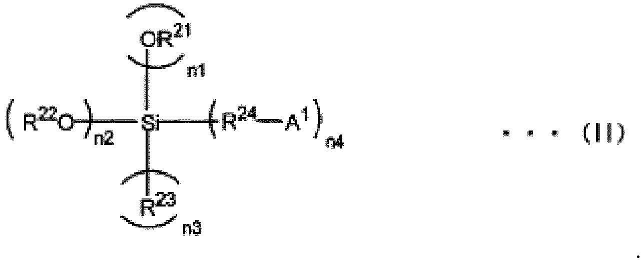

In the general formula (II), n1+n2+n3+n4 is 4 (where n2 is an integer of 1 to 4, and n1, n3, and n4 each are an integer of 0 to 3), A¹ is at least one functional group selected from: a saturated cyclic tertiary amine compound residue; unsaturated cyclic tertiary amine compound residue; ketimine residue; a nitrile group; an isocyanato group; a thioisocyanato group; an epoxy group; a thioepoxy group; an isocyanuric acid tri-hydrocarbylester group; a carbonated dihydrocarbyl ester group; a pyridine group; a ketone group; a thioketone group; an aldehyde group; a thioaldehyde group; an amide group; a carboxylic acid ester group; a thiocarboxylic acid ester group; metal salt of carboxylic acid ester; metal salt of thiocarboxylic acid ester; a carboxylic anhydride residue; a carboxylic halogen compound residue; and a primary or secondary amino group having a hydrolyzable group or a mercapto group having a hydrolyzable group, in which A¹ may be the same or different from each other when n4 is 2 or more, A¹ may be a divalent group which binds to Si to form a cyclic structure, R²¹ is a monovalent aliphatic or alicyclic hydrocarbon group with 1 to 20 carbon atoms or a monovalent aromatic hydrocarbon group with 6 to 18 carbon atoms, in which R²¹ may be the same or different from each other when n1 is 2 or more, R²³ is a monovalent aliphatic or alicyclic hydrocarbon group with 1 to 20 carbon atoms, a monovalent aromatic hydrocarbon group with 6 to 18 carbon atoms, or a halogen atom, in which R²³ may be the same or different when n3 is 2 or more, R²² is a monovalent aliphatic or alicyclic hydrocarbon group with 1 to 20 carbon atoms or a monovalent aromatic hydrocarbon group with 6 to 18 carbon atoms, either of which may contain a nitrogen atom and/or a silicon atom, in which R²² may the same or different from each other or may form a ring together when n2 is 2 or more, R²⁴ is a divalent aliphatic or alicyclic hydrocarbon group with 1 to 20 carbon atoms or a divalent aromatic hydrocarbon group with 6 to 18 carbon atoms, in which R²⁴ may be the same or different when n4 is 2 or more. Preferred examples of the hydrolyzable group in the primary or secondary amino group having a hydrolyzable group or the mercapto group having a hydrolyzable group are a trimethylsilyl group and a tert-butyldimethylsilyl group, with a trimethylsilyl group being particularly preferred.

Preferred as the compound represented by the aforementioned general formula (II) is a compound represented by the following general formula (III):

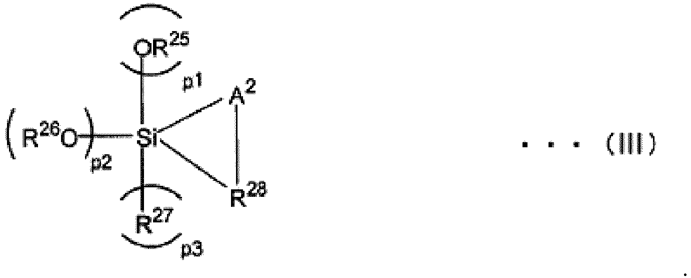

In the general formula (III), p1+p2+p3 is 2 (where P2 is an integer of 1 to 2, p1 and p3 each are an integer of 0 to 1), A² is NRa (Ra is a monovalent hydrocarbon group, a hydrolyzable group, or a nitrogen-containing organic group) or sulfur, R²⁵ is a monovalent aliphatic or alicyclic hydrocarbon group with 1 to 20 carbon atoms or a monovalent aromatic hydrocarbon group with 6 to 18 carbon atoms, R²⁷ is a monovalent aliphatic or alicyclic hydrocarbon group with 1 to 20 carbon atoms, a monovalent aromatic hydrocarbon group with 6 to 18, or a halogen atom, R²⁶ is a monovalent aliphatic or alicyclic hydrocarbon group with 1 to 20 carbon atoms, a monovalent aromatic hydrocarbon group with 6 to 18, or a nitrogen-containing organic group, either of which may contain a nitrogen atom and/or a silicon atom, in which R²⁶ may be the same or different from each other or may form a ring together when p2 is 2, R²⁸ is a divalent aliphatic or alicyclic hydrocarbon group with 1 to 20 carbon atoms or a divalent aromatic hydrocarbon group with 6 to 18. Preferred examples of the hydrolyzable group are a trimethylsilyl group and a tert-butyldimethylsilyl group, with a trimethylsilyl group being particularly preferred.

Also preferred as the compound represented by the aforementioned general formula (II) is a compound represented by the following general formula (IV):

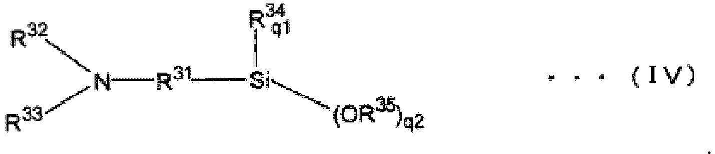

In the general formula (IV), q1+q2 is 3 (where q1 is an integer of 0 to 2, q2 is an integer of 1 to 3), R³¹ is a divalent aliphatic or alicyclic hydrocarbon group with 1 to 20 carbon atoms or a divalent aromatic hydrocarbon group with 6 to 18 carbon atoms, R³² and R³³ each independently represent a hydrolyzable group, a monovalent aliphatic or alicyclic hydrocarbon group with 1 to 20 carbon atoms or a monovalent aromatic hydrocarbon group with 6 to 18 carbon atoms, R³⁴ is a monovalent aliphatic or alicyclic hydrocarbon group with 1 to 20 carbon atoms or a monovalent aromatic hydrocarbon group with 6 to 18 carbon atoms, in which R³⁴ may be the same or different from each other when q1 is 2, R³⁵ is a monovalent aliphatic or alicyclic hydrocarbon group with 1 to 20 carbon atoms or a monovalent aromatic hydrocarbon group with 6 to 18 carbon atoms, in which R³⁵ may be the same or different from each other when q2 is 2 or more. Preferred examples of the hydrolyzable group are a trimethylsilyl group and a tert-butyldimethylsilyl group, with a trimethylsilyl group being particularly preferred.

Also preferred as the compound represented by the aforementioned general formula (II) is a compound represented by the following general formula (V):

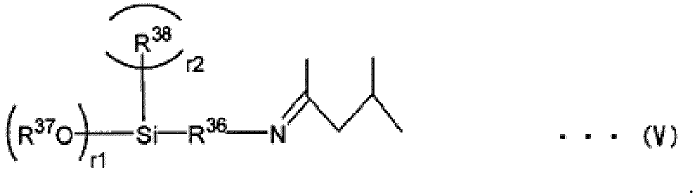

In the general formula (V), r1+r2 is 3 (where r1 is an integer of 1 to 3, r2 is an integer of 0 to 2), R³⁶ is a divalent aliphatic or alicyclic hydrocarbon group with 1 to 20 carbon atoms or a divalent aromatic hydrocarbon group with 6 to 18 carbon atoms, R³⁷ is a dimethylaminomethyl group, dimethylaminoethyl group, a diethylaminomethyl group, a diethylaminoethyl group, a methylsilyl(methyl)aminomethyl group, a methylsilyl(methyl)aminoethyl group, methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group with 1 to 20 carbon atoms or a monovalent aromatic hydrocarbon group with 6 to 18 carbon atoms, in which R³⁷ may be the same or different from each other when r1 is 2 or more, R³⁸ is a hydrocarbyloxy group with 1 to 20 carbon atoms, a monovalent aliphatic or alicyclic hydrocarbon group with 1 to 20 carbon atoms, or a monovalent aromatic hydrocarbon group with 6 to 18 carbon atoms, in which R³⁸ may be the same or different from each other when r2 is 2.

Also preferred as the compound represented by the aforementioned general formula (II) is a compound represented by the following general formula (VI):

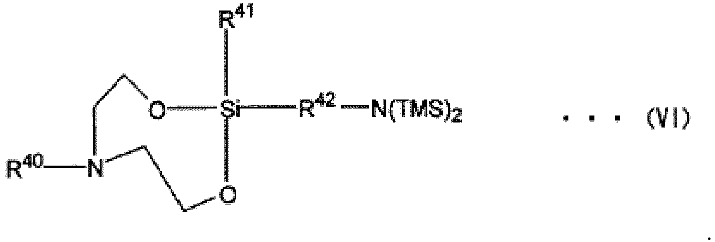

In the general formula (VI), R⁴⁰ is a trimethylsilyl group, a monovalent aliphatic or alicyclic hydrocarbon group with 1 to 20 carbon atoms or a monovalent aromatic hydrocarbon group with 6 to 18 carbon atoms, R⁴¹ is a hydrocarbyloxy group with 1 to 20 carbon atoms, a monovalent aliphatic or alicyclic hydrocarbon group with 1 to 20 carbon atoms, or a monovalent aromatic hydrocarbon group with 6 to 18 carbon atoms, and R⁴² is a divalent aliphatic or alicyclic hydrocarbon group with 1 to 20 carbon atoms or a divalent aromatic hydrocarbon group with 6 to 18 carbon atoms. Here, TMS refers to a trimethylsilyl group (hereinafter the same).

Also preferred as the compound represented by the aforementioned general formula (II) is a compound represented by the following general formula (VII):

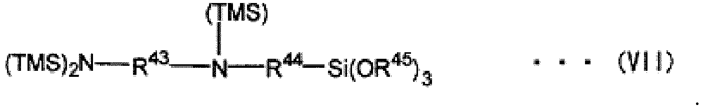

In general formula (VII), R⁴³ and R⁴⁴ are each independently represent a divalent aliphatic or alicyclic hydrocarbon group with 1 to 20 carbon atoms or a divalent aromatic hydrocarbon group with 6 to 18 carbon atoms, R⁴⁵ is a monovalent aliphatic or alicyclic hydrocarbon group with 1 to 20 carbon atoms or a monovalent aromatic hydrocarbon group with 6 to 18 carbon atoms, where R⁴⁵ may be the same or different from one another.

Also preferred as the compound represented by the aforementioned general formula (II) is a compound represented by the following general formula (VIII):

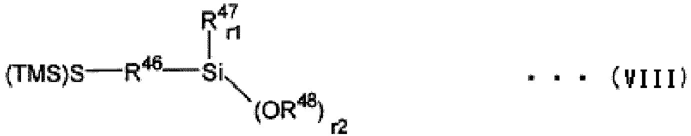

In the general formula (VIII), r1+r2 is 3 (where r1 is an integer of 0 to 2, r2 is an integer of 1 to 3), R⁴⁶ is a divalent aliphatic or alicyclic hydrocarbon group with 1 to 20 carbon atoms or a divalent aromatic hydrocarbon group with 6 to 18 carbon atoms, R⁴⁷ and R⁴⁸ each independently represent a monovalent aliphatic or alicyclic hydrocarbon group with 1 to 20 carbon atoms or a monovalent aromatic hydrocarbon group with 6 to 18 carbon atoms. The plurality of R⁴⁷ or R⁴⁸ may be the same or different from one another.

Also preferred as the compound represented by the aforementioned general formula (II) is a compound represented by the following general formula (IX):

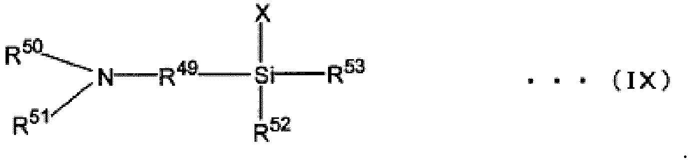

In the general formula (IX), X is a halogen atom, R⁴⁹ is a divalent aliphatic or alicyclic hydrocarbon group with 1 to 20 carbon atoms or a divalent aromatic hydrocarbon group with 6 to 18 carbon atoms, R⁵⁰ and R⁵¹ each independently represent a hydrolyzable group, a monovalent aliphatic or alicyclic hydrocarbon group with 1 to 20 carbon atoms, or a monovalent aromatic hydrocarbon group with 6 to 18 carbon atoms, or alternatively, R⁵⁰ binds to R⁵¹ to form a divalent organic group, and R⁵² and R⁵³ each independently represent a halogen atom, a hydrocarbyloxy group, a monovalent aliphatic or alicyclic hydrocarbon group with 1 to 20 carbon atoms, or a monovalent aromatic hydrocarbon group with 6 to 18 carbon atoms. R⁵⁰ and R⁵¹ are each preferably a hydrolyzable group, and preferred examples of the hydrolyzable group are a trimethylsilyl group and a tert-butyldimethylsilyl group, with a trimethylsilyl group being particularly preferred.

Also preferred as the hydrocarbyloxysilane compound represented by the aforementioned general formula (II) are compounds represented by the following general formulae (X) to (XIII):

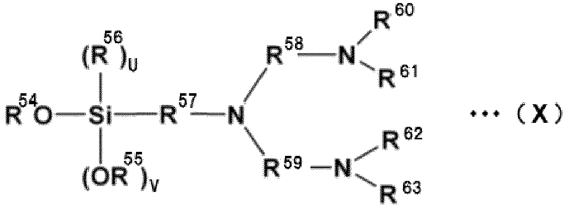

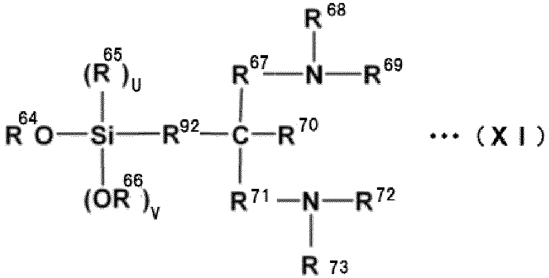

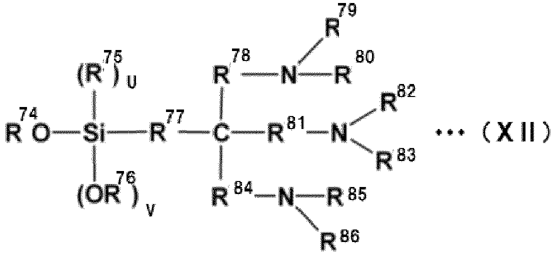

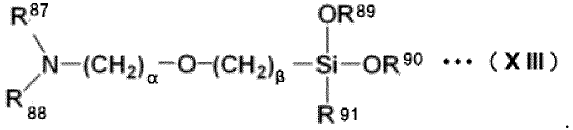

In the general formulae (X) to (XIII), reference symbols U, V each are an integer of 0 to 2 which also satisfy U+V=2. R⁵⁴ to R⁹² in the general formulae (X) to (XIII) may be the same or different from each other, and each are a monovalent or divalent aliphatic or alicyclic hydrocarbon group with 1 to 20 carbon atoms or a monovalent or divalent aromatic hydrocarbon group with 6 to 18 carbon atoms. In the general formula (XIII), α and β each are an integer of 0 to 5.

Preferred as the polymerization initiator having the modified functional group is a lithium amide compound. Examples of the lithium amide compound may include, for example, lithium hexamethyleneimide, lithium pyrrolidide, lithium piperidide, lithium heptamethyleneimide, lithium dodecamethyleneimide, lithium dimethylamide, lithium diethylamide, lithium dibuthylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, and lithium methylphenetylamide.

The disclosed rubber composition contains: a compatible resin (B) and an incompatible resin (C), the compatible resin (B) being different in SP value from the rubber component (A) by 1.5 (cal/cm³)^{1/2} or less, the incompatible resin (C) being different in SP value from the rubber component (A) by more than 1.5 (cal/cm³)^{1/2}. The compatible resin (B) and the incompatible resin (C) may both be compounded with the rubber composition, so as to significantly reduce the elastic modulus in a high distortion region while suppressing fluctuations in the elastic modulus in a low distortion region. Accordingly, a rubber composition compounded with the compatible resin (B) and the incompatible resin (C) may be applied to a tread of a tire, so as to ensure rigidity of the tread rubber in a portion that suffers minor distortion during running as being distant from the contact patch with a road surface, while increasing the deformed volume of the tread rubber that suffers significant distortion during running as being in the vicinity of the contact patch with a road surface, with the result that the friction coefficient (µ) on a wet road surface is increased, to thereby improve the wet performance of the tire. Further, in the disclosed rubber composition, the rubber composition is compounded with both the compatible resin (B) and the incompatible resin (C) so as to suppress fluctuations in the elastic modulus in a low distortion region, to thereby prevent the fuel efficiency of the tire from being affected by the resin, and further prevent the cornering performance of the tire from being deteriorated. Further, the disclosed rubber composition, which is compounded with both the compatible resin (B) and the incompatible resin (C), is capable of suppressing increase in adhesion, to thereby suppress deterioration in ozone resistance.

The mass compounding ratio of the compatible resin (B) and the incompatible resin (C) (i.e., the compounding amount of the compatible resin (B)/the compounding amount of the incompatible resin (C)) may preferably fall within a range of 1/4 to 4/1, and more preferably within a range of 1/2 to 2/1. The compounding ratio of the compatible resin (B) and the incompatible resin (C) falling within the aforementioned rage is capable of further improving wet performance of a tire in which the rubber composition is applied to the tread rubber thereof.

The compatible resin (B) has a softening point, which is preferably 110°C or less, and more preferably 85°C or less. The compatible resin (B) having the softening point of 110°C or less allows for further improving wet performance of a tire in which the rubber composition is applied to the tread rubber thereof.

The incompatible resin (C) has a softening point, which is preferably in a range equal to or less than 145°C.

Then, the compatible resin (B) with a softening point of 110°C or less and the incompatible resin (C) with a softening point of 145°C or less may be combined, to thereby further improve wet performance of a tire in which the rubber composition is applied to the tread rubber thereof.

The total compounding amount of the compatible resin (B) and the incompatible resin (C) is 10 parts by mass or more, preferably 12 parts by mass or more, and preferably 40 parts by mass or less, more preferably 30 parts by mass or less, and further preferably 20 parts by mass or less, with respect to 100 parts by mass of the rubber component (A). The total compounding amount of the compatible resin (B) and the incompatible resin (C) falling below 10 parts by mass, with respect to 100 parts by mass of the rubber component (A), cannot sufficiently reduce the elastic modulus in a high distortion region of the rubber composition. Further, the total compounding amount of the compatible resin (B) and the incompatible resin (C) being 40 parts by mass or less with respect to 100 parts by mass of the rubber component (A) is capable of sufficiently ensuring the rigidity of a tread of a tire when the rubber composition is applied to a tread rubber of the tire.

The compounding amount of the compatible resin (B) is preferably 5 parts by mass or more, and preferably 30 parts by mass or less, and more preferably 20 parts by mass or less, with respect to 100 parts by mass of the rubber component (A). Further, the compounding amount of the incompatible resin (C) is preferably 5 parts by mass or more, and preferably 30 parts by mass or less, and more preferably 20 parts by mass or less, with respect to 100 parts by mass of the rubber component (A). The compounding amounts of the compatible resin (B) and the incompatible resin (C) falling within the aforementioned ranges are capable of sufficiently reducing the elastic modulus in a high distortion region of the rubber composition.

The compatible resin (B) and the incompatible resin (C) may be selected as appropriate depending on the SP value of the rubber component (A); however, in terms of wet performance, preferred resins may include: a C₅ resin; a C₉ resin; a C₅-C₉ resin; a dicyclopentadiene resin; a rosin resin, an alkyl phenol resin; and a terpene phenol resin.

The C₅ resin refers to a C₅ synthetic petroleum resin. Examples of such C₅ resin may include, for example, an aliphatic resin obtained by polymerizing, using a Friedel-Crafts type catalyst such as AlCl₃, BF₃, a C₅ fraction resulting from thermal cracking of naphtha in petrochemical industry. The C₅ fraction generally includes: an olefin-based hydrocarbon such as 1-pentene, 2-pentene, 2-methyl-1-butene, 2-methyl-2-butene, 3-methyl-1-butene; and a diolefin-based hydrocarbon such as 2-methyl-1,3-butadiene, 1,2-pentadiene, 1,3-pentadiene, 3-methyl-1,2-butadiene. The C₅ resin is commercially available, and examples thereof include, for example, "ESCOREZ (registered trademark) 1000 series" as an aliphatic petroleum resin manufactured by ExxonMobil Chemical Company, and "A100, B170, M100, R100" etc. from among "Quintone (registered trademark) 100 Series" as an aliphatic petroleum resin manufactured by Zeon Corporation.

The C₉ resin is a resin obtained by polymerizing an aromatic compound with 9 carbon atoms containing, as principal monomers, vinyl toluene, alkyl styrene, indene, which are C₉ fractions by-produced together with petrochemical fundamental raw materials such as ethylene and propylene, through, for example, thermal cracking of naphtha in petrochemical industries. Here, specific examples of C₉ fractions obtained through thermal cracking of naphtha may include: vinyl toluene; α-methylstyrene; β-methylstyrene; γ-methylstyrene; o-methylstyrene; p-methylstyrene; and indene. The C₉ resin may be obtained by using, along with C₉ fractions, styrene or the like as a C₈ fraction, methylindene, 1,3-dimethylstyrene as C₁₀ fractions, and even naphthalene, vinylnaphthalene, vinylanthracene, p-tert-butylstyrene as raw materials, and by copolymerizing these C₈ to C₁₀ fractions as mixtures, through, for example, a Friedel-Crafts type catalyst. The C₉ resin may be a modified petroleum resin modified by a compound having a hydroxyl group or an unsaturated carboxylic compound. The C₉ resin is commercially available, and examples of an unmodified C₉ petroleum resin may be available under the trade names such as "Nisseki Neopolymer (registered trademark) L-90", "Nisseki Neopolymer (registered trademark) 120", "Nisseki Neopolymer (registered trademark) 130", "Nisseki Neopolymer (registered trademark) 140" (manufactured by JX Nippon Oil & Energy Corporation).

The C₅-C₉ resins refer to a C₅-C₉ synthetic petroleum resins. An example of such C₅-C₉ resins may include a solid polymer obtained by, for example, polymerizing petroleum-derived C₅ fraction and C₉ fraction, using a Friedel-Crafts type catalyst such as AlCl₃, BF₃, and more specific examples thereof may include a copolymer or the like containing styrene, vinyltoluene, α-methylstyrene, and indene as principal components. Preferred as the C₅-C₉ resins is a resin containing less components of C₉ or more, in view of the compatibility with the rubber component (A). Here, a resin containing "less components of C₉ or more" refers to a resin containing less than 50 mass%, and preferably 40 mass% or less of components of C₉ or more, with respect to the total amount of the resin. The C₅-C₉ resins are commercially available under the trade names such as "Quintone (registered trademark) G100B" (manufactured by Zeon Corporation), and of "ECR213" (manufactured by ExxonMobil Chemical Company).

The dicyclopentadiene resin is a petroleum resin manufactured using, as a main material, dicyclopentadiene obtained through dimerization of cyclopentadiene. The cyclopentadiene resin is commercially available under the trade names such as "Quintone (registered trademark) 1000 Series", among which "1105, 1325, 1340", as an alicyclic petroleum resin manufactured by Zeon Corporation.

The rosin resin is an residue left after distillation of turpentine oil from balsams such as pine resin collected as tree sap from plants of the pine family, and examples thereof include: a natural resin including rhodinic acid (such as abietic acid, palustric acid, isopimaric acid); and a modified resin or hydrogenated resin obtained by modifying and processing the natural resin through hydroganation. Examples thereof may include, for example: a natural resin rosin, and a polymerized rosin or partially hydrogenated rosin thereof; a glycerin ester rosin, and a partially hydrogenated rosin, fully hydrogenated rosin, or polymerized rosin thereof; a pentaerythritol ester rosin, and a partially hydrogenated rosin or polymerized rosin thereof. Examples of the natural resin rosin include: a gum rosin, a tall oil rosin, and wood rosin, which are contained in a crude pine resin or tall oil. The rosin resin is commercially available under the trade names such as "NEOTALL 105" (manufactured by Harima Chemicals Group, Inc.), "SN Tack 754" (manufactured by San Nopco Ltd.), "Lime Resin No. 1", "Pensel A", and "Pensel AD" (manufactured by Arakawa Chemical Co., Ltd.), and "Poly-Pale" and "Pentalyn C" (manufactured by Eastman Chemical Co., Ltd.), and "High Rosin S" (manufactured by Taishamatsu Essential Oil Co., Ltd.).

The alkyl phenol resin may be obtained through, for example, a condensation reaction in the presence of a catalyst of alkylphenol and formaldehyde. The alkyl phenol resin is commercially available under the trade names of, for example, "Hitanol 1502P" (manufactured by Hitachi Chemical Industry Co., Ltd.), "TACKIROL 201" (manufactured by Taoka Chemical Company, Limited), "TACKIROL 250-1" (brominated alkylphenol formaldehyde resin, manufactured by Taoka Chemical Company, Limited), "TACKIROL 250-III" (brominated alkylphenol formaldehyde resin, manufactured by Taoka Chemical Company, Limited), and "R7521P", "SP1068", "R7510PJ", "R7572P", and "R7578P" (manufactured by SI GROUP INC.).

The terpene phenol resin may be obtained by, for example, subjecting terpenes and various phenols to reaction using a Friedel-Crafts type catalyst, or further to condensation with formaline. Terpenes to be used as the raw material are not particularly limited, and may preferably be monoterpene hydrocarbons such as α-pinene and limonene, and more preferably terpenes containing α-pinene, with α-pinene being particularly preferred. The terpene phenol resin is commercially available under the trade names of, for example, "TAMANOL 803L", "TAMANOL 901" (manufactured by Arakawa Chemical Industries, Ltd.), "YS Polyster (registered trademark) U" series, "YS Polyster (registered trademark) T" series, "YS Polyster (registered trademark) S" series, "YS Polyster (registered trademark) G" series, "YS Polyster (registered trademark) N" series, "YS Polyster (registered trademark) K" series, "YS Polyster (registered trademark) TH" series (manufactured by YASUHARA CHEMICAL CO., LTD.).

The disclosed rubber composition may preferably include a filler. Further, the disclosed rubber composition may preferably include silica as the filler, and the content of silica in the filler may preferably 70 mass% or more, and more preferably 80 mass% or more, and further preferably 90 mass% or more, and the total content of the filler may be silica. The content of silica in the filler being 70 mass% or more allows for further reducing tanδ of the rubber composition, which further improves fuel efficiency of a tire applied with the rubber composition.

The silica is not particularly limited, and examples thereof may include, for example, wet silica (hydrated silicic acid), dry silica (silicic anhydride), calcium silicate, and aluminum silicate, with wet silica being preferred. These silica may be use alone or in combination of two or more.

In the disclosed rubber composition, silica may be compounded preferably in a range of 40 to 70 parts by mass and more preferably in a range of 45 to 60 parts by mass, with respect to 100 parts by mass of the rubber component (A). Silica compounded by 40 parts by mass or more with respect to 100 parts by mass of the rubber component (A) is capable of further reducing tanδ of the rubber composition, so as to further improve fuel efficiency of a tire applied with the rubber composition. Meanwhile, silica compounded by 70 parts by mass or less is capable of providing high flexibility to the rubber composition; such rubber composition may be applied to a tread rubber of a tire, which increases the deformation volume of the tread rubber, to thereby further improve wet performance of the tire.

In the disclosed rubber composition, the nitrogen adsorption specific surface area of silica in the filler is not particularly limited, and general silica with a nitrogen adsorption specific surface area exceeding 150 m²/g may be used. Alternatively, silica with a relatively large particle size may also be used in which the average primary particle size of the silica is 21 nm or more and the nitrogen adsorption specific surface area is 150 m²/g or less (hereinafter, also referred to as "large particle silica").

The disclosed rubber composition may preferably further contain carbon black as the filler, where the carbon black may be compounded preferably in a range of 1 to 10 parts by mass and more preferably in a range of 3 to 8 parts by mass, with respect to 100 parts by mass of the rubber component (A). The rubber composition compounded with carbon black by 1 part by mass or more can be increased in rigidity. Alternatively, the rubber composition compounded with carbon black by 10 parts by mass or less is capable of suppressing increase of tanδ, which allows for achieving both tire fuel efficiency and wet performance of a tire at higher levels when the rubber composition is applied to a tread rubber of the tire.

The carbon black is not particularly limited, and examples thereof may include carbon blacks of such grades as, for example, GPF, FEF, HAF, ISAF, SAF, with ISAF, SAF being preferred in view of improving tire wet performance. These carbon blacks may be used alone or in combination or two or more.

The filler may also include, in addition to the aforementioned silica and carbon black: aluminum hydroxide; alumina; clay; calcium carbonate; and the like.

In the rubber composition, the filler may be compounded preferably by 30 parts by mass or more, and more preferably by 40 parts by mass or more, and preferably by 100 parts by mass or less, and more preferably 80 parts by mass or less, with respect to 100 parts by mass of the rubber component (A). The rubber composition with filler compounded in the aforementioned range may further improve fuel efficiency and wet performance of a tire when the rubber composition is applied to a tread rubber of the tire.

The disclosed rubber composition may preferably further contain a silane coupling agent in order to improve the compounding effect of the silica. The silane coupling agent is not particularly limited, and examples thereof may include, for example, bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfide. These silane coupling agents may be used alone or in combination of two or more.

Further, the silane coupling agent may preferably be compounded in a range of 2 to 20 parts by mass and more preferably in a range of 5 to 15 parts by mass, with respect to 100 parts by mass of the silica. The silane coupling agent compounded by 2 parts by mass or more, with respect to 100 parts by mass of silica, is capable of sufficiently improving the compounding effect of the silica, while the silane coupling agent compounded by 20 parts by mass or less is less likely to result in gelation of the rubber component (A).

The disclosed rubber composition may further include a softener in view of processability and operability. The softener may preferably be compounded in a range of 1 to 5 parts by mass and more preferably in a range of 1.5 to 3 parts by mass, with respect to 100 parts by mass of the rubber component (A). The softener compounded by 1 part by mass or more can facilitate kneading of the rubber composition, while the softener compounded by 5 parts by mass or less can suppress reduction in rigidity of the rubber composition.

Here, examples of the softener may include mineral-derived mineral oil, petroleum-derived aromatic oil, paraffin oil, naphthene oil, and naturally-derived palm oil, with mineral-derived softener and petroleum-derived softener being preferred in view of tire wet performance.

The disclosed rubber composition may further include a fatty acid metal salt. Examples of metals for use in the fatty acid metal salt may include Zn, K, Ca, Na, Mg, Co, Ni, Ba, Fe, Al, Cu, Mn, with Zn being preferred. Meanwhile, examples of fatty acid for use in the fatty acid metal salt may include a fatty acid having a saturated or unsaturated straight chain, branched chain, or cyclic structure with 4 to 30 carbon atoms, with a saturated or unsaturated straight chain fatty acid with 10 to 22 carbon atoms being preferred. Examples of the saturated straight chain fatty acid with 10 to 22 carbon atoms may include: lauric acid; myristic acid; palmitic acid; stearic acid; and the like, and examples of the unsaturated straight chain fatty acid with 10 to 22 carbon atoms may include: oleic acid; linoleic acid; linolenic acid; arachidonic acid; and the like. The fatty acid metal salts may be used alone or in combination of two or more. The fatty acid metal salt may preferably be compounded in a range of 0.1 to 10 parts by mass and more preferably in a range of 0.5 to 5 parts by mass, with respect to 100 parts by mass of the rubber component (A).

The disclosed rubber composition may also include, for example, compounding agents generally used in the rubber industry, such as stearic acid, an age resistor, zinc oxide (zinc white), a vulcanization accelerator, and a vulcanizing agent which may be selected as appropriate without affecting the object of the present disclosure, in addition to the rubber component (A), the compatible resin (B), the incompatible resin (C), the filler, the silane coupling agent, the softener, and the fatty acid metal salt. These compounding agents may suitably use those commercially available. However, in view of reducing storage modulus of the disclosed rubber composition on dynamic strain of 1% at 0°C, it is preferred not to compound thermosetting resins such as novolak-type and resol-type phenol resin, and resorcinol resin.

The disclosed rubber composition may preferably have tanδ of 0.5 or less at 0°C, a difference of 0.070 or less between tanδ at 30°C and tanδ at 60°C, and a storage modulus of 20 MPa or less on dynamic strain of 1% at 0°C.

The rubber composition with tanδ of 0.5 or less at 0°C is capable of improving fuel efficiency at low temperatures of a tire applied with the rubber composition. Here, tanδ at 0°C is preferably 0.45 or less, and more preferably 0.4 or less, in view of the fuel efficiency of the tire at low temperatures. Further, the lower limit of tanδ at 0°C is not particularly limited; however, tanδ at 0°C in general is 0.15 or more.

Further, when the difference between tanδ at 30°C and tanδ at 60°C of the rubber composition is 0.070 or less, tanδ becomes less temperature dependent, which can improve fuel efficiency of a tire applied with the rubber composition, across a wide temperature region. The difference between tanδ at 30°C and tanδ at 60°C is more preferably 0.060 or less, further preferably 0.055 or less, and particularly preferably 0.050 or less, in view of suppressing temperature dependence of the fuel efficiency of the tire. However, the lower limit of the difference between tanδ at 30°C and tanδ at 60°C is not particularly limited, and the difference may be 0.

Further, the rubber composition having the storage modulus (E') of 20 MPa or less on dynamic strain of 1% at 0°C is high in flexibility at low temperatures; thus, the rubber composition may be applied to a tire tread rubber so as to improve contact performance of the tread rubber, to thereby further improve wet performance of the tire. Here, in view of wet performance, the storage modulus (E') on dynamic strain of 1% at 0°C is more preferably 18 MPa or less, and further preferably 16 MPa or less, and preferably 3 MPa or more and more preferably 5 MPa or more.

Further, the disclosed rubber composition may preferably have tanδ at 30°C of 0.4 or less, more preferably 0.35 or less, and generally 0.1 or more. Further, the disclosed rubber composition may preferably have tanδ at 60°C of 0.35 or less, more preferably 0.3 or less, and generally 0.05 or more. In this case, the tire fuel efficiency can be improved across a wide temperature range.

In the disclosed rubber composition, the difference between tanδ at 0°C and tanδ at 30°C is preferably 0.30 or less, more preferably 0.14 to 0.30, further preferably 0.15 to 0.25, and particularly preferably 0.16 to 0.20, in view of improving wet performance and reducing temperature dependence of fuel efficiency.

Further, in the disclosed rubber composition, the difference between tanδ at 0°C and tanδ at 60°C is preferably 0.35 or less, more preferably 0.24 or less, and further preferably 0.23 or less, or the difference may be 0, in view of reducing temperature dependence of fuel efficiency.

The disclosed rubber composition preferably has a tensile strength (Tb) of 20 MPa or more, and more preferably 23 MPa or more, in view of wet performance. A rubber composition having a tensile strength of 20 MPa or more may be used for a tread rubber, so as to improve rigidity of the tread rubber as a whole, to thereby further improve wet performance.

The disclosed rubber composition suitably configured as described above, in which tanδ at 0°C is 0.5 or less and the difference between tanδ at 30°C and tanδ at 60°C is 0.070 or less, is preferably produced through the step of kneading the rubber component (A), the compatible resin (B), and the incompatible resin (C) at 150 to 165°C, excluding the vulcanization compounding agents including the vulcanizing agent and the vulcanization accelerator.

The kneading of the aforementioned components at 150 to 165°C, excluding the vulcanization compounding agent, can have the compounding agents, other than the vulcanization compounding agents, uniformly dispersed into the rubber component (A) while avoiding premature vulcanization (scorch), so that the compounding effect of the compounding agents can be full exerted, which makes small the difference between tanδ at 30°C and tanδ at 60°C while reducing tanδ of the rubber composition at 0°C.

Here, the rubber composition may be varied in tanδ, the difference between tanδ at respective temperatures, the storage modulus (E'), and the tensile strength (Tb) by adjusting, not only the aforementioned kneading temperature, but also the types and the compounding ratio of the rubber component (A), the types and the compounding amounts of the compatible resin (B) and the incompatible resin (C), the ratio of silica in the filler and the types of silica, and further the types and amounts of other compounding agents.

Further, the rubber composition, which has been kneaded at 150 to 165°C, may preferably be further kneaded at another temperature of less than 150°C with the addition of vulcanization compounding agents. Here, the rubber composition, in which the compounding agents other than the vulcanization compounding agent have been uniformly dispersed in the rubber component (A) and thereafter compounded with vulcanization compounding agents including a vulcanizing agent and a vulcanization accelerator, may preferably be kneaded at a temperature capable of preventing premature vulcanization (scorch), for example, at 90°C to 120°C.

In the manufacture of the rubber composition, the kneading time for the kneading at each temperature is not particularly limited, and may be set as appropriate in consideration of the size of the kneader, the volume of the raw material, and the types and condition of the raw material.

Examples of the vulcanizing agent may include sulfur and the like. The vulcanizing agent may be compounded, in terms of sulfur content, in a range of 0.1 to 10 parts by mass and more preferably in a range of 1 to 4 parts by mass, with respect to 100 parts by mass of the rubber component (A). The compounding amount of the vulcanizing agent, which is 0.1 parts by mass or more in terms of sulfur content, is capable of ensuring the rupture strength and wear resistance of the vulcanized rubber, while the compounding amount of 10 parts by mass or less is capable of sufficiently ensuring rubber elasticity. In particular, the compounding amount of the vulcanizing agent, which is 4 parts by mass or less in terms of sulfur, is capable of further improving wet performance of the tire.

The vulcanization accelerator is not particularly limited, and examples thereof may include, for example, a thiazole-based vulcanization accelerator such as 2-mercaptobenzothiazole (M), dibenzothiazyl disulfide (DM), N-cyclohexyl-2-benzothiazylsulfenamide (CZ), N-tert-butyl-2-benzothiazolylsulfenamide (NS), and a guanidine-based vulcanization accelerator such as 1,3-diphenylguanidine (DPG). Here, the disclosed rubber composition may preferably include three different vulcanization accelerators. The vulcanization accelerator may preferably be compounded in a range of 0.1 to 5 parts by mass and more preferably be in a range of 0.2 to 3 parts by mass, with respect to 100 parts by mass of the rubber component (A).

The disclosed rubber composition is obtained by compounding, into the rubber component (A), the compatible resin (B) and the incompatible resin (C) and various compounding agents selected as needed, and by kneading the same as described above by using, for example, a Banbury mixer or a roll, and thereafter by subjecting it to warming, extrusion or the like.

The rubber composition can be used in various rubber products including tires. In particular, the disclosed rubber composition is suited for use in a tread rubber.

### <Tire>

The disclosed tire has a feature of using the aforementioned rubber composition as a tread rubber. The disclosed tire uses the aforementioned rubber composition in a tread rubber, and thus, is excellent in fuel efficiency and wet performance. The disclosed tire can be used as a tire for various vehicles, but is preferred as a tire for passenger vehicles.

The disclosed tire may be obtained using, depending on the types of the tire to be applied, an unvulcanized rubber composition, and may be vulcanized after being formed. Alternatively, the disclosed tire may be obtained using a semi-vulcanized rubber through such process as pre-vulcanization process which is shaped and further vulcanized. The disclosed tire is preferably a pneumatic tire, and a gas to be filled into the pneumatic tire may use an inert gas such as nitrogen, argon, and helium, in addition to general air or air adjusted in terms of oxygen partial pressure.

### EXAMPLES

In below, the present disclosure is described in detail with reference to Examples; however, the present disclosure is not limited at all to the following Examples.

### <Preparation and Evaluation of Rubber Composition>

Rubber compositions were manufactured according to the formulations of Table 1 using a general Banbury mixer. Compounded into the rubber compositions in addition to the compounding agents of Table 1, were: 3 parts by mass of petroleum-based oil [manufactured by Japan Energy Corporation, trade name "Process X-140"], 1 part by mass of age resistor [N-(1,3-dimethylbutyl)-N'-phenyl-p-phenylenediamine, manufactured by Ouchi Shinko Chemical Industrial Co., Ltd, trade name "Nocrac 6C"], 1 part by mass of stearic acid, 2.5 parts by mass of zinc white; 0.8 parts by mass of a vulcanization accelerator A [1,3-diphenylguanidine, manufactured by Sumitomo Chemical Company Limited, trade name "SOXINOL (registered trademark) D-G"], 1.1 parts by mass of a vulcanization accelerator B [dibenzothiazyl disulfide, Ouchi Shinko Chemical Industrial Co., Ltd., trade name "Nocceler (registered trademark) DM-P"], 1 part by mass of a vulcanization accelerator C [N-cyclohexyl-2-benzothiazylsulfenamide, Ouchi Shinko Chemical Industrial Co., Ltd., trade name "Nocceler (registered trademark) CZ-G"], and 1.9 parts by mass of sulfur.

The rubber compositions thus obtained were measured by the following methods for the loss tangent (tanδ), the storage modulus (E'), and the tensile strength (Tb), and further, evaluated for wet performance, fuel efficiency, cornering performance, adhesion, and ozone resistance. The results are provided in Table 1.

### (1) Loss Tangent (tanδ) and Storage Modulus (E')

The rubber composition was vulcanized for 33 minutes at 145°C to be obtained as a vulcanized rubber, which was measured for tanδ (loss tangent) at 0°C, 30°C, 60°C, and the storage modulus (E') at 0°C, using a spectrometer manufactured by Ueshima Seisakusho Co., Ltd, under the condition of the initial load: 160 mg, the dynamic strain: 1%, and the frequency: 52 Hz.

### (2) Tensile Strength (Tb)

The rubber composition was vulcanized for 33 minutes at 145°C to be obtained as a vulcanized rubber, which was measured for the tensile strength (Tb) in accordance with JIS K6251-1993.

### (3) Wet Performance

Using the rubber composition obtained as described above as a tread rubber, a passenger vehicle pneumatic radial tire of size 195/65R15 was fabricated. The test tire thus fabricated was mounted onto a test vehicle, so as to evaluate the grip performance by feeling ratings of the driver in an actual vehicle test on a wet road surface. The results are indexed with the feeling rating 100 for the tire of Comparative Example 1. Larger index values indicate more excellent wet performance.

### (4) Fuel Efficiency

Calculated was the inverse of tanδ at 60°C measured as described above for each of the vulcanized rubbers, and each inverse was indexed with the inverse 100 of tanδ of Comparative Example 1. Larger index values indicate smaller tanδ at 60°C, meaning that the fuel efficiency is excellent.

### (5) Cornering Performance

Using the rubber composition obtained as described above as a tread rubber, a pneumatic radial tire for passenger vehicles of size 195/65R15 was fabricated. The test tire thus fabricated was mounted onto a test vehicle, so as to evaluate the cornering performance by feeling ratings of the driver in an actual vehicle test. The results are indexed with the feeling rating 100 for the tire of Comparative Example 1. Larger index values indicate more excellent cornering performance.

### (6) Adhesion

An unvulcanized rubber sheet that has been subjected to sheeting before vulcanization was pressed against metal, so as to measure the adhesion thereof with respect to the metal. The measurements were each indexed with the inverse 100 of the adhesion of Comparative Example 1. Larger index values represent smaller adhesion, meaning that the sheet is excellent in adhesion property.

### (7) Ozone Resistance

The evaluation was performed in accordance with "Dynamic Strain Testing" of JIS K 6259. Specifically, a test piece was prepared from a vulcanized rubber obtained through vulcanization for 33 minutes at 145°C, and the time it takes to generate ozone crack on the test piece surface was measured under the conditions of: the ozone concentration of 50 pphm; the temperature of 40°C; and the tensile strain of 20%. The measurements were each indexed with the ozone crack generation time 100 of Comparative Example 1. The larger indexed value represents longer ozone crack generation time, meaning that the ozone resistance is excellent.

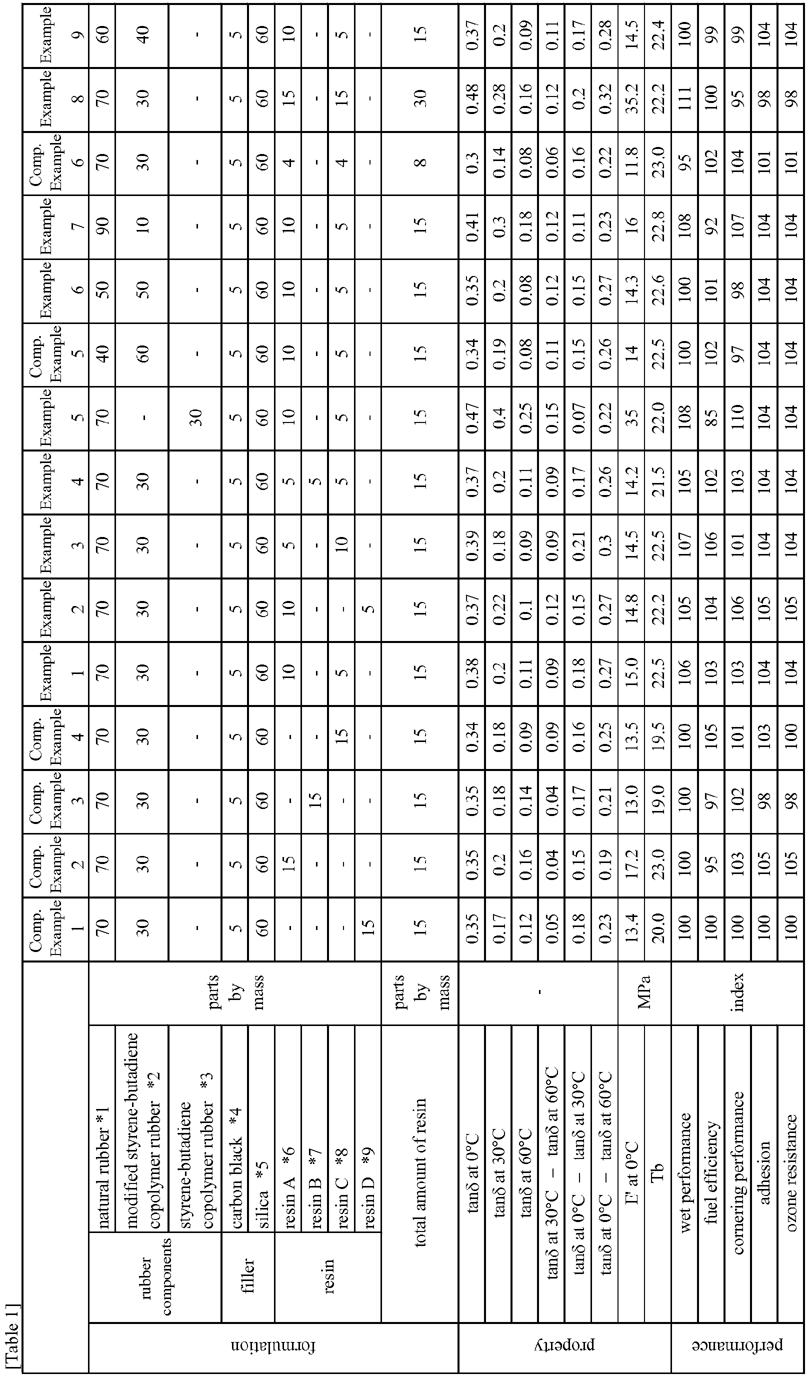

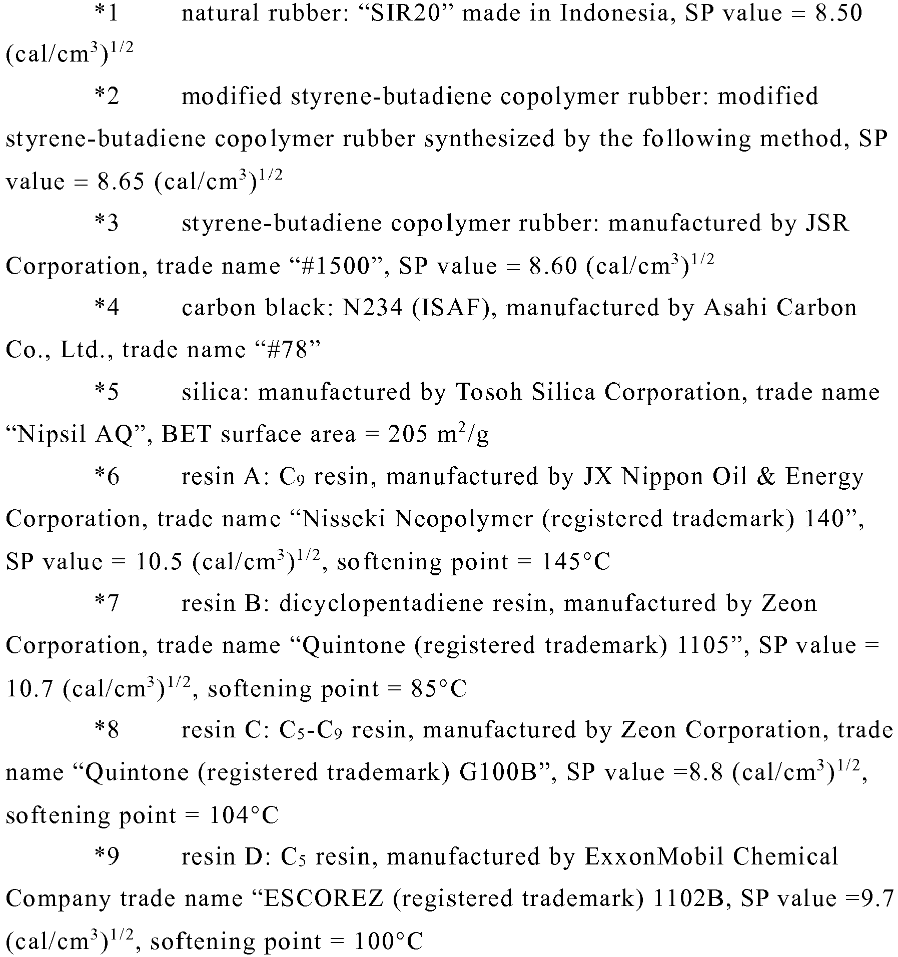

### <Synthesis of Modified Styrene-Butadiene Copolymer Rubber>

A cyclohexane solution of 1,3-butadiene and a cyclohexane solution of styrene were added into a dried, nitrogen-substituted heat-resistant glass container of 800 mL such that 1,3-butadiene of 67.5 g and styrene of 7.5 g was contained, to which 0.6 mmol of 2,2-ditetrahydrofurylpropane was added and 0.8 mmol of n-butyllithium was added, which was thereafter polymerized at 50°C for 1.5 hours. To a polymerization reaction system which attained substantially 100% of polymerization conversion rate, 0.72 mmol of N,N-bis(trimethylsilyl)-3-[diethoxy(methyl)silyl]propylamine [corresponding to the compound of the general formula (IV)] was added as a modifier, which was subjected to modification reaction at 50°C for 30 minutes. Thereafter, 2 mL of an isopropanol solution containing 5 mass% of 2,6-di-t-butyl-p-cresol (BHT) was added thereto to cease the reaction, and the reactant was dried according to a conventional method, to thereby obtain a modified styrene-butadiene copolymer rubber.

As can be found from Table 1, the disclosed rubber composition may be applied to a tire to improve the tire fuel efficiency, wet performance, and cornering performance. It can also be found that the disclosed rubber composition is excellent in adhesion and ozone resistance.

### INDUSTRIAL APPLICABILITY

The disclosed rubber composition can be used as a tread rubber of a tire. The disclosed tire can be used as tires for various vehicles.

## Claims

1. A rubber composition comprising: a rubber component (A) containing 50 mass% or more of natural rubber; a compatible resin (B); and an incompatible resin (C), the compatible resin (B) being different in SP value from the rubber component (A) by 1.5 (cal/cm³)^{1/2} or less, the incompatible resin (C) being different in SP value from the rubber component (A) by more than 1.5 (cal/cm³)^{1/2},
wherein the total compounding amount of the compatible resin (B) and the incompatible resin (C) is 10 parts by mass or more with respect to 100 parts by mass of the rubber component (A).

2. The rubber composition according to claim 1, wherein a mass compounding ratio (B/C) of the compatible resin (B) and the incompatible resin (C) is 1/4 to 4/1.

3. The rubber composition according to claim 1 or 2, wherein the compatible resin (B) has a softening point of 110°C or less.

4. The rubber composition according to any one of claims 1 to 3, wherein the rubber component (A) further contains a modified polymer.

5. A tire using the rubber composition according to any one of claims 1 to 4 as a tread rubber.
